Europäisches Patentamt

European Patent Office

Office européen des brevets

(19)

(11) Publication number: **0 439 756 A2**

# EUROPEAN PATENT APPLICATION

(21) Application number: **90124129.9**

(22) Date of filing: **13.12.90**

(51) Int. Cl.⁵: **G06F 15/80**

The title of the invention has been amended (Guidelines for Examination in the EPO, A-III, 7.3).

(30) Priority: **15.12.89 JP 324061/89**

(43) Date of publication of application:
**07.08.91 Bulletin 91/32**

(84) Designated Contracting States:
**DE FR GB**

(71) Applicant: **Kabushiki Kaisha Toshiba
72, Horikawa-cho Saiwai-ku
Kawasaki-shi(JP)**

(72) Inventor: **Suzuoka, Takashi
343 Toshiba-Urayasu-ryo, 3-16-46, Fujimi
Urayasu-shi, Chiba-ken(JP)**

(74) Representative: **Lehn, Werner, Dipl.-Ing. et al
Hoffmann, Eitle & Partner Patentanwälte
Arabellastrasse 4
W-8000 München 81(DE)**

(54) Artificial neural network.

(57) Disclosed is a method and system of artificial neural networks processing, comprising having a plurality of artificial neurons and connecting the artificial neurons to each other through the intervention of links, the links having a weight defining the strength of the mutual relation between two artificial neurons, and deciding an output value of each artificial neuron with relation to weight values of the links connecting to the artificial neuron and output values of the other artificial neurons connected to the links, when links are not clearly provided in advance, the mutual relation between artificial neurons treated as if there were links respectively expected to have a constant weight value if provided.

EP 0 439 756 A2

Xerox Copy Centre

# METHOD AND SYSTEM OF ARTIFICIAL NEURAL NETWORKS PROCESSING

## BACKGROUND OF THE INVENTION

### 1. Field of the Invention

The present invention relates to a method and a system of artificial neural networks processing, and particularly to a method and system of artificial neural networks processing suitable for association of concepts.

### 2. Description of the Background Art

Recently, it has been attempted to construct an artificial neural network by interconnecting a plurality of artificial neurons through weighted links respectively in order to carry out various processes.

For example, in the Hopfield model which is a general model of the artificial neural network, an output value of an artificial neuron is decided by receiving the output values of all the other artificial neurons connected to the former artificial neuron, moreover the output value of the former artificial neuron is given to all the other artificial neurons connected thereto for carrying out various association processes.

If the number of all the artificial neurons is N, an output value of an artificial neuron i is $O_i$, a weight of a link directed from the artificial neuron i to an artificial neuron j is $W_{ji}$, and a threshold value of the artificial neuron j is $I_j$, an output value $O_j$ of the artificial neuron j can be obtained by the following equations:

$$O_j = f(net_j) \qquad (1)$$
$$net_j = \sum_i W_{ji} O_i - I_j \qquad (2)$$

where f is a monotone increasing function.

Namely, the output value $O_j$ of the artificial neuron j is decided as the function f of $net_j$ by the equation (1). Moreover, as shown by the equation (2), $net_j$ is obtained by subtracting the threshold value $I_j$ from the total sum of the values defined by multiplying the output value $O_i$ and the weight $W_{ji}$ of the corresponding link together.

In this case, if it is desired that two artificial neurons have a similar value at the same time, it is necessary to provide a link having a positive weight between these two artificial neurons. Conversely, when it is desired that one artificial neuron has a different values from another at the same time, it is necessary to provide a link having a negative weight between these two artificial neurons.

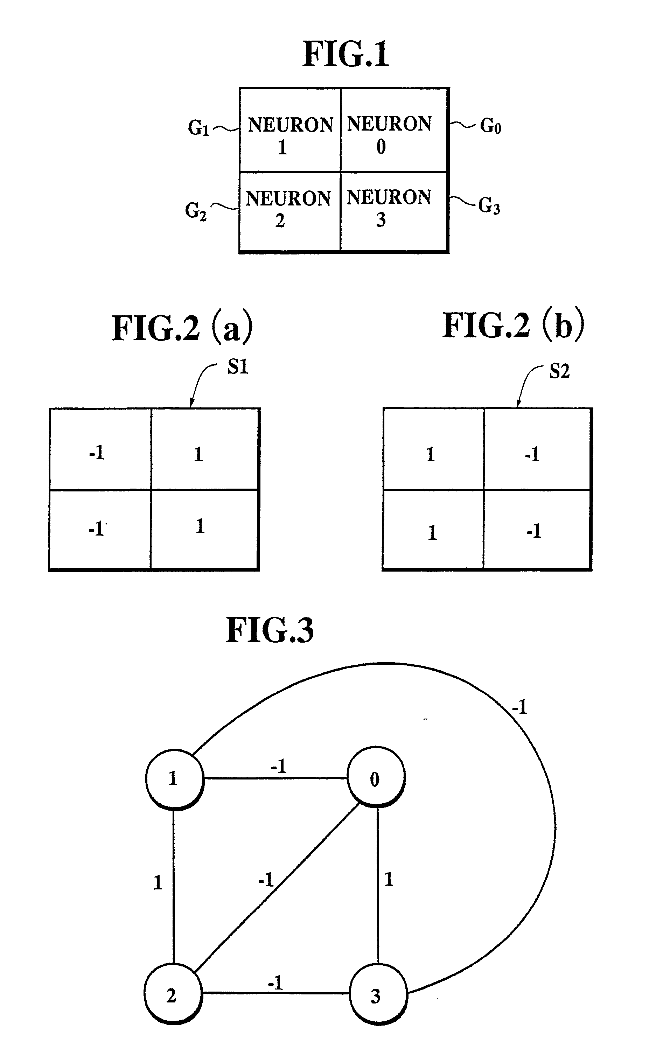

For example, as shown in Fig.1, four artificial neurons 0, 1, 2, 3 are assigned to four picture elements G0, G1, G2, G3. In this case, to associate two patterns S1, S2 as respectively shown in Figs .2a and 2b, it is necessary to use a network as shown in Fig.3.

In the network shown in Fig.3, the four artificial neurons shown in Fig.1 are connected to one another through links respectively having corresponding weights $w_{ji}$

The weights $W_{ji}$ of these links can be expressed by the following equation (3) when the pattern numbers are S(1, 2):
$$W_{ji} = (\sum O_j{}^S O_i{}^S)/2$$
$$= (O_j{}^1 O_i{}^1 + O_j{}^2 O_i{}^2)/2$$

(3)where $O_j{}^S$, $O_i{}^S$ respectively designate output values of artificial neurons i, j in a pattern S. By the equation (3), the weights $W_{ji}$ of the links are obtained as 1, -1 as shown in Fig.3 from the pattern S1, S2 respectively shown in Figs.2a and 2b.

On the other hand, when the value of the picture element $G_0$ at the right upper section in Fig.1 is 1 and the other picture elements $G_1$, $G_2$, $G_3$ are unknown, initial output values are temporarily given as follows:
$O_0 = 1$, $O_1 = O_2 = O_3 = O$, and
respective threshold values are given as follows:
$I_0 = I_1 = I_2 = I_3) = 0$.

As a result, the output value $O_0$ of the artificial neuron 0 propagates to the other artificial neurons, and finally, these output values are respectively obtained as follows:
$O_0 = O_3 = 1$, and
$O_1 = O_2 = -1$,

so that the pattern S1 shown in Fig. 2a is associated. In the same manner, when the value of the right upper picture element $G<\Sigma\infty>\emptyset$ in Fig.1 is -1, the pattern S2 shown in Fig.2b is associated.

As mentioned above, in the association of such an artificial neural network, propagation of excitation by links having positive weights and another propagation of suppression by links having negative weights play important roles respectively. If all the links having negative weights are removed from the network, it becomes impossible to carry out the association correctly. Moreover, in the above association method which restricts all the output values and the weights of links to positive values and adjusts the gradient of the function f, it becomes very difficult to decide the gradient to carry out such association.

Moreover, in such an example, since an object to be associated is a picture pattern, the degree of the relation between picture elements can be expressed with ease as weights of links. However, when the concept concerning a topic to be objected is associated among a plurality of concepts which obtained by each artificial neuron expressing a concept, though it is capable of defining the near relation between concepts, it is difficult to define the far relation between concepts. In this case, the near relation between concepts means that those concepts are frequently used in the same context.

For example, the concepts of "freedom" and "independence" are in the near relation to each other. Moreover, the concept of "restraint" is also in the near relation to the concept of "freedom". Namely, the far relation does not means such an opposite relation as that between the concepts of "freedom" and "restraint", but means a unrelated concept. For example, the concept of "desk" can be mentioned as a concept in such a far relation to the concept of "freedom". However, it is difficult to clearly show concepts unrelated to one another, and it is impossible to manually enumerate all the concepts in such an unrelated relation. Moreover, when links are provided between all the unrelated concepts, the number of links becomes very large, so that the amount of calculation according to the equations (1) and (2) becomes extremely large.

Accordingly, in such a conventional method and system of artificial neural networks processing, it is necessary to clearly provide the weights to all the links. Particularly, when the association of concepts is carried out, it is difficult to provide all the links to be required. Moreover, in such a case, it is very difficult to decide the weighted values to all the links, and the calculation amount must be large. Consequently,there are many troubles in the formation of the neural networks.

## SUMMARY OF THE INVENTION

Therefore, it is one object to provide a method of artificial neural networks processing by which association can be carried out suitably and efficiently only by considering sections where links are clearly specified even when there are some sections where it is difficult to clearly provide links between artificial neurons.

Also, it is another object to provide a system of artificial neural networks processing which can execute the method of artificial neural networks processing with ease.

Accordingly, the method of artificial neural networks processing for solving the problems comprising:

having a plurality of artificial neurons and connecting the artificial neurons to each other through the intervention of links, the links having a weight defining the strength of the mutual relation between two artificial neurons; and

deciding an output value of each artificial neuron with relation to weight values of the links connecting to the artificial neuron and output values of the other artificial neurons connected to the links;

when links are not clearly provided in advance, the mutual relation between artificial neurons treated as if there were links respectively expected to have a constant weight value if provided.

In the method of artificial neural networks processing according to the present invention, when links are not clearly specified, in other words, when links are not decided or the weights of the links are not set up in advance, it is supposed that links having a constant weight, for example a constant negative weight are provided between artificial neurons.

Accordingly, for example, when the artificial neural network is a network for carrying out association of concepts, for example an exciting relation in common related to meanings of terms, a negative constant value as a default value is given to all the unrelated relations between the concepts, for example the concepts between "freedom" and "desk" without designating them as unrelated relations in particular. Thus, the network can be expressed practically and be formed with ease. Moreover, since all the unrelated relations are dealt with as a constant value, an easy operation process can be realized.

Also, the system of artificial neural networks processing for solving the problems comprising:

a plurality of artificial neurons; and

links respectively connecting two artificial neurons and having a weight value defining the strength of the mutual relation between the two artificial neurons;

an output value of each artificial neuron decided with relation to weight values of the links connecting to the artificial neuron and output values of the other artificial neurons connected to the links; and

when links are not clearly provided in advance, the mutual relation between artificial neurons treated as if there were links respectively expected to have a constant weight value if provided.

In the system of artificial neural networks processing according to the present invention the method of artificial neural networks processing is able to be executed with ease.

## BRIEF DESCRIPTION OF THE DRAWINGS

Figs.1 to 3 are explanatory diagrams of a general method of association,

Fig.4 is a flowchart to show algorithm of a method of artificial neural networks processing related to an embodiment of the present invention, and

Fig.5 is an explanatory diagram to show an example of a network to which the present invention is applied.

## DESCRIPTION OF THE SPECIFIC EMBODIMENTS

Hereinafter, an embodiment of the present invention will be explained with reference to the accompanying drawings.

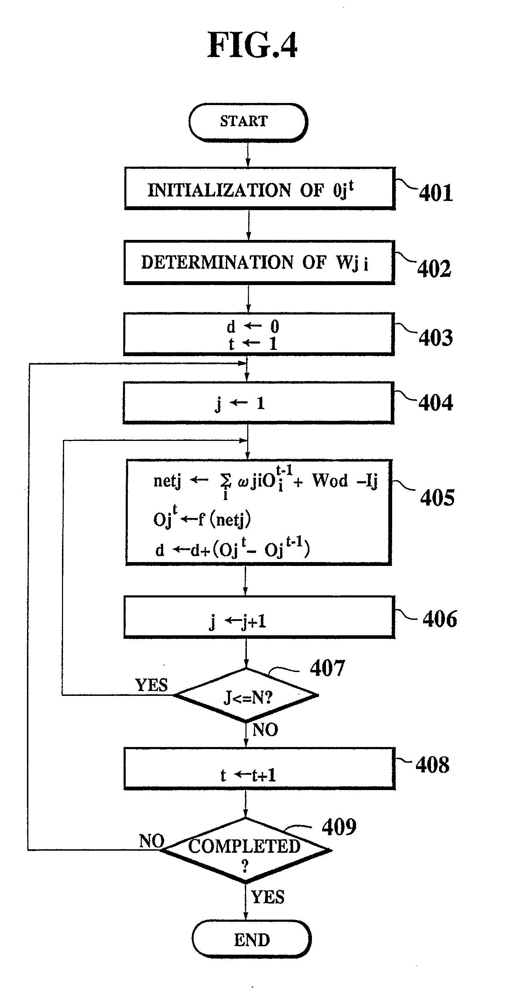

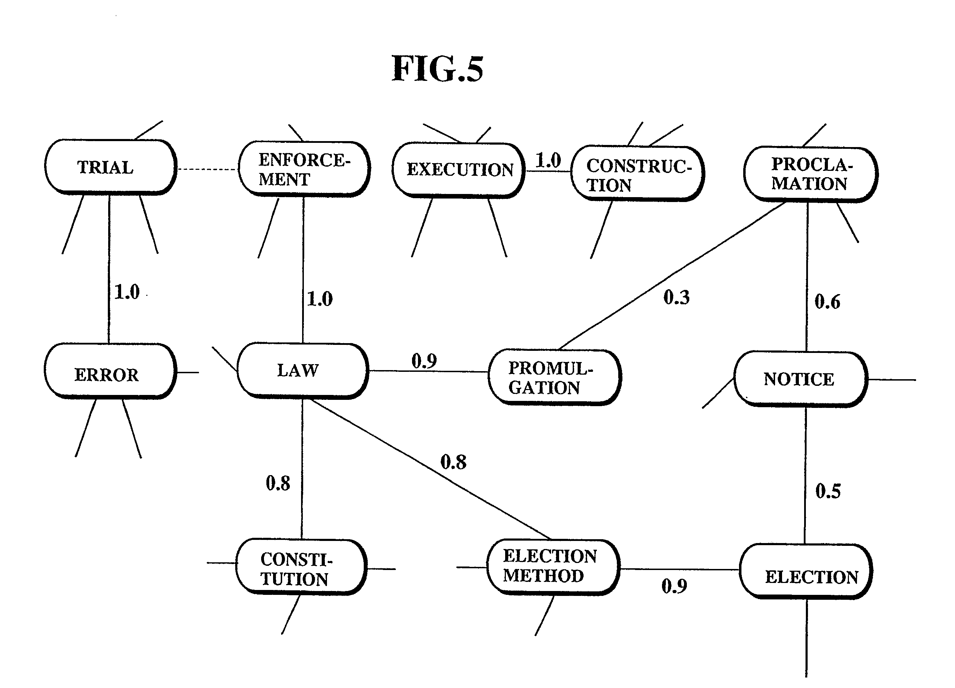

Fig.4 is a flowchart to show a method of artificial neural networks processing related to an embodiment of the present invention, and Fig.5 is an explanatory diagram of networks showing various relations of concepts.

Fig.5 shows an example of networks for showing relations between terms, and there are provided links respectively having suitable weights between sections for respectively showing the terms.

Each of the weights assigned to the respective links is designated by a positive value when the two concepts connected by the link corresponding to the designated weight are a near relation to each other, moreover the value becomes large when the possibility that these two concepts are frequently used in the same context becomes high. Namely, all the values of the links are positive or zero and there is no negative value in any links. For example, the concept of "trial" and the concept of "error" are a near relation to each other, moreover, since the possibility that the two concepts appear in the same context is high, the weight of the link provided therebetween is evaluated at a value of 1.0. Besides, with respect to the relation between the concepts of "enforcement" and "law" or those of "execution" and "construction ", the weight of each links is 1.0. On the other hand, the concepts of "notification" and "election" are also near to each other, however, the possibility that the two concepts appear in the same context is not so high as that in the case of "trial" and "error", the weight of the link provided therebetween is evaluated at 0.5. Moreover, with respect to each pair of concepts which are near to each other, the weight of the link such as 0.3, 0.6, 0.8, 0.9 and the like is given based on the possibility that these concepts appear in the same context.

While, no definition is given to a relation between two concepts which are not a near relation to each other, for example the concepts of " trial " and "notification" or "execution" and "election" in this network,.

Generally, such a network is prepared for example based on information from "Material for Analysis of Relations between Terms (1989)" in which a list of combinations of terms respectively used in a same phrase is reported.

All the links, if those are existing, have a positive value respectively when an user sets an initial value to each link. In this embodiment, a link having a negative constant weight $W_{<\Sigma\infty>\emptyset}$ ($W_{<\Sigma\infty>\emptyset} < 0$) is added between every pair of concepts unrelated to each other and between every pair of concepts having an opposite relation to each other.

In such a network, $net_j$ described in the above equation (1) can be obtained based on the following equation:

$$net_j = \sum_{i \in D_j} W_{ji} O_i + \sum_{i \notin D_j} W_\emptyset O_i - I_j \qquad (4)$$

where, $W_{ji}$ is the weight of the link between the artificial neuron i and the artificial neuron j and is setted initially by the user, and

$D_j = \{i|\ W_{ji} \neq 0\}$.

Namely, links clearly specified from the beginning are designated as the total sum at the first term in the equation (4), further links not clearly specified are respectively evaluated by the constant value $W<\Sigma\infty>\emptyset$ anddesignated as the total sum at the second term in the equation (4). This relation is common to all of the N number of the artificial neurons.

Moreover, the above equation (4) can be changed as follows:

$$net_j = \sum_{i \in D_j} (W_{ji} - W_\theta) O_i + \sum_{i=1} W_\theta O_i - I_j \qquad (5)$$

$$= \sum_{i \in D_j} \omega_{ji} O_i + W_\theta \sum_{i=1} O_i - I_j \qquad (6)$$

$$\omega_{ji} = \begin{cases} W_{ji} - W_\theta & (W_{ji} \neq 0) \\ 0 & (W_{ji} = 0) \end{cases} \qquad (7)$$

Namely, when the weight $W<\Sigma\infty>\emptyset$ is subtracted in advance from each weight $W_{ji}$ of the links specified from the beginning in the first term of the equation (6), we can realize that it is easy to calculate the second term of the equation (6). That is, the calculation is carried out not intended for the total sum based on i $D_j$ but for the total sum based on all of i in the second term concerning the weight $W<\Sigma\infty>\emptyset$. Moreover, $\omega_{ji}$ is defined as $W_{ji}$ - $W<\Sigma\infty>\emptyset$ in the equation (6) and the second term is constant to the respective artificial neurons with respect to i over the range from 1 to N.

In such a manner, each weight $W_{ji}$ of the links is changed in advance into $\omega_{ji}$ before the network is operated, and the equation (5) is calculated on execution. Though the second term is increased in the equation (5) as compared with the equation (1), since the second term is independent of j, the calculation can be carried out with ease. In more detail, when the number of links connected to an artificial neuron is k, it is necessary to carry out k times of multiplications on average for calculating $net_j$ of one artificial neuron according to the equation (1). Accordingly, when the equation (1) is calculated according to the equation (2) after pairs of all the unspecified artificial neurons are provided with links of a constant weight $W<\Sigma\infty>\emptyset$, it is necessary to carry out N times of multiplications for calculating $net_j$ of one artificial neuron. However, as shown in the equation (6), the calculation can be completed by carrying out only (k + 1) times of multiplications in this embodiment.

From the above teachings, algorithm of a method of artificial neural networks processing related to this embodiment is explained with reference to Fig. 4.

In the step 401, each output value $O_j^t$ is initialized. Where t shows the number of execution times.

Then, in the step 402, each $\omega_{ji}$ is determined in accordance with the equation (7).

In the following step 403, a variable d for designating an amount of change of the output value is set at 0, and a variable t for designating the number of execution times is set at 1 for initialization.

Then, in the step 404, a variable j is set at 1 for expressing an artificial neuron j and the algorithm shifts to the step 405.

In the steps 405 to 407, the following equations (8) to (10) are calculated with respect to the respective artificial neurons j to obtain the output value $O_j^t$.

$$net_j \leftarrow \sum \omega_{ji} O_i^{t-1} + W_\theta d - I_j \qquad (8)$$

$$O_j^t \leftarrow f(net_j) \qquad (9)$$

$$d \leftarrow d + (O_j^t - O_j^{t-1}) \qquad (10)$$

In the following 408, the number of times of execution t is increased by 1. In the step 409, a final condition is inspected, and if the condition is satisfied the algorithm is ended, otherwise the steps 404 to 409 are repeated.

In such a manner, according to the embodiment of the present invention, since the negative constant weight $W<\Sigma\infty>\emptyset$ is given to each of the links not specified, it is possible to realize association suitably and efficiently. For example, no link is provided between the concepts of "trial" and "election" in advance as shown in Fig.5, a link having a negative constant weight is provided therebetween to show that the concepts of "trial" and "election" are unrelated to each other in this embodiment. Namely, since the network of the embodiment is so formed as explained above, a network having rational and effective construction can be provided.

As mentioned above, according to this embodiment, a user has only to designate links which are clearly specified to be defined, and sections unrelated to one another are automatically provided with suitable links, thus the most suitable association result can be obtained.

In the embodiment, the method of artificial neural networks processing includes no momentum. However, if it includes some momentum, it is necessary to express $net_j$ as follows:

$$net_j = (1 - \delta)net_j + \delta(\Sigma \omega_{ji}O_i + W_\theta \Sigma O_i - I_j) \qquad (11)$$

where, $0<\delta<1$.

Moreover, $W<\Sigma\infty>\emptyset$ is a constant value to all the artificial neurons j in common in the above embodiment, however it is also possible to decide $W<\Sigma\infty>\emptyset$ so that the value is constant to each group of the artificial neurons. Furthermore, to minimize the calculation amount, when a weight which is most frequently given to links connected to an artificial neuron j is $W_j$, it is possible to designate the weight $W<\Sigma\infty>\emptyset$ to the links having the weight equal to or less than $W_j$ indiscriminately.

As described above, according to the present invention, since links having a suitable constant weight are provided between some artificial neurons which are not clearly provided with any links in advance, a user has only to designate links for excitation which are clearly specified to be defined, and links for suppression which are difficult to be defined are automatically prepared by the system, so that suitable and efficient association can be carried out.

It should be obviously understood that the present invention is not limited to the above embodiment, and that it can be variously modified without departing from the scope thereof.

## Claims

1. A method of artificial neural networks processing, comprising:
   having a plurality of artificial neurons and connecting the artificial neurons to each other through the intervention of links, the links having a weight defining the strength of the mutual relation between two artificial neurons; and
   deciding an output value of each artificial neuron with relation to weight values of the links connecting to the artificial neuron and output values of the other artificial neurons connected to the links;
   when links are not clearly provided in advance, the mutual relation between artificial neurons treated as if there were links respectively expected to have a constant weight value if provided.

2. A method of artificial neural networks processing according to claim 1 in which the links are respectively provided the constant weight value for defining the strength between concepts which are unrelated to each other when the association of the concepts is carried out.

3. A method of artificial neural networks processing according to claim 1 in which the constant weight value is negative.

4. A method of artificial neural networks processing according to claim 2 in which the concepts unrelated to each other are "trial" and "election".

5. A method of artificial neural networks processing according to claim 1 which includes some momentum.

6. A system of artificial neural networks processing, comprising:
   a plurality of artificial neurons; and links respectively connecting two artificial neurons and having a weight value defining the strength of the mutual relation between the two artificial neurons;
   an output value of each artificial neuron decided with relation to weight values of the links connecting to the artificial neuron and output values of the other artificial neurons connected to the links; and
   when links are not clearly provided in advance, the mutual relation between artificial neurons treated as if there were links respectively expected to have a constant weight value if provided.

7. A system of artificial neural networks processing according to claim 6 in which the links are respectively provided the constant weight value for defining the strength between concepts which are unrelated to each other when the association of the concepts is carried out.

8. A system of artificial neural networks processing according to claim 6 in which the constant weight value is negative.

9. A system of artificial neural networks processing according to claim 7 in which the concepts unrelated to each other are "trial" and "election".

10. A system of artificial neural networks processing according to claim 6 which includes some momentum.

# FIG.1

# FIG.2 (a)

# FIG.2 (b)

# FIG.3

# FIG.4

START

INITIALIZATION OF $0j^t$ — 401

DETERMINATION OF $Wj\,i$ — 402

$d \leftarrow 0$
$t \leftarrow 1$ — 403

$j \leftarrow 1$ — 404

$netj \leftarrow \sum_i \omega ji O_i^{t-1} + Wod - Ij$

$Oj^t \leftarrow f(netj)$

$d \leftarrow d + (Oj^t - Oj^{t-1})$ — 405

$j \leftarrow j+1$ — 406

407

$J<=N?$

YES

NO

$t \leftarrow t+1$ — 408

409

COMPLETED ?

NO

YES

END

# FIG.5

ERROR

TRIAL

1.0

CONSTI-
TUTION

LAW

ENFORCE-
MENT

0.8

1.0

EXECUTION

1.0

CONSTRUC-
TION

0.9

PROMUL-
GATION

0.8

0.3

ELECTION
METHOD

0.9

ELECTION

0.5

NOTICE

0.6

PROCLA-
MATION